(19) **Europäisches Patentamt**

**European Patent Office**

**Office européen des brevets**

(11) Publication number : **0 487 704 B1**

(12) **EUROPEAN PATENT SPECIFICATION**

(45) Date of publication of patent specification :
28.09.94 Bulletin 94/39

(51) Int. Cl.⁵ : **G01J 3/28,** G01N 21/25

(21) Application number : **91912242.4**

(22) Date of filing : **24.06.91**

(86) International application number :
**PCT/GB91/01019**

(87) International publication number :
**WO 92/00509 09.01.92 Gazette 92/02**

(54) SPECTROMETERS.

(30) Priority : **22.06.90 GB 9013984**

(43) Date of publication of application :
**03.06.92 Bulletin 92/23**

(45) Publication of the grant of the patent :
**28.09.94 Bulletin 94/39**

(84) Designated Contracting States :
**DE FR GB IT NL**

(56) References cited :
**DE-A- 3 413 065**
**US-A- 448 529**
**Analytical Chemistry, vol. 61, no. 11, June
1989, Columbus, OH, US, pages 723-734; J.
Treado: "The Hadamard Transform"**
**Applied Optics, vol. 8, no. 12, December 1969,
pages 2552-2553; J.A. Decker et al: "Exper-
imental Operation of a Hadamard Spec-
trometer"**

(73) Proprietor : **BRITISH TECHNOLOGY GROUP
LIMITED**
**101 Newington Causeway**
**London SE1 6BU (GB)**

(72) Inventor : **BELTON, Peter, Stanley**
**79 The Avenues**
**Norwich**
**Norfolk NR2 3QR (GB)**
Inventor : **WRIGHT, Kevin, Michael**
**10 Chalfont Walk**
**Eaton**
**Norwich NR4 7NH (GB)**

(74) Representative : **Cullis, Roger et al**
**Patents Department**
**British Technology Group Ltd**
**101 Newington Causeway**
**London SE1 6BU (GB)**

## Description

This invention relates to spectrometers and, in particular, to methods of multiplexing the signals received by spectrometers.

In general, laboratory spectrometers receive signals from one radiation source and one sample, and display the results as a single spectrum of the sample.

In many applications for sensing and process control it is desirable to use a single costly spectrometer to analyse the signals from many sources and/or samples. The simplest way to do this is to present each signal sequentially to the spectrometer, and analyse the results separately. Alternatively, a multiplexing technique in which several signals are presented and analysed at once may be used. Multiplexing has two advantages, the total signal arriving at the detector is greater than if the signals are observed sequentially and, for systems in which the noise is independent of the signal, the overall signal-to-noise ratio is increased relative to that which can be obtained by sequential sampling. The disadvantage is that it is necessary to determine the contribution of each source and sample to the total observed (composite) signal. This may be done by encoding the information carried by each signal in some appropriate way before recording the composite signal, and then using a suitable decoding process to recover the individual signals.

A variety of encoding and decoding schemes, which differ in their degree of difficulty of implementation, are possible, Typically the observations $Y_i$ which measure the total signal presented to the decoder (data-handling system) can be related to the unknown individual signals $X_j$ by a system of linear simultaneous equations which can be written in matrix form:

$$
\begin{bmatrix} Y_1 \\ Y_2 \\ \cdot \\ \cdot \\ \cdot \\ \cdot \\ Y_N \end{bmatrix} = \begin{bmatrix} A_{11} & A_{12} \cdots\cdots\cdots\cdots A_{1N} \\ A_{21} & A_{22} \cdots\cdots\cdots\cdots A_{2N} \\ \cdot & \quad\quad\quad\quad\quad \cdot \\ \cdot & \quad\quad\quad\quad\quad \cdot \\ \cdot & \quad\quad\quad\quad\quad \cdot \\ A_{N1} & \cdots\cdots\cdots\cdots A_{NN} \end{bmatrix} \begin{bmatrix} X_1 \\ X_2 \\ \cdot \\ \cdot \\ \cdot \\ X_N \end{bmatrix} \qquad (1)
$$

The unknowns $X_j$ can be recovered by solving these equations.

The equation (1) presents a unifying framework for discussing the design of various kinds of spectrometer. The simplest case is that of a dispersive instrument, such as a conventional grating infra-red spectrometer or continuous wave NMR. The values $X_j$ are radiation intensities at various wavelengths, distinguished by a wavelength sorting device such as a diffraction grating. These intensities are recorded by the instrument and output in the form of a spectrum $Y_i$, i=1,2,...,N. Thus in this trivial case, the coefficients $A_{ij}$ comprise a unit matrix.

More complicated, and closely related, examples are provided by Fourier transform infra-red (FT-IR) and pulsed Fourier transform nuclear magnetic resonance (FT-NMR) spectrometers. In the former case, wavelength information (i.e. radiation intensities $X_j$ at various wavelengths) is encoded by a Michelson interferometer into a series of intensities $Y_i$ sorted as a function of the position of a movable mirror in one arm of the interferometer. In the NMR case the encoding is achieved, not by some physical device, but by the precession and progressive dephasing of the nuclear spins within the sample. Intensity values $X_j$ as a function of frequency are encoded and recorded as a series of induced voltages $Y_i$ measured at successive time intervals after the excitation of the sample.

In both these cases, the matrix A is a unitary matrix of Fourier coefficients. Equation (1) can be solved by carrying out an inverse Fourier transform of the data $Y_i$.

An infinite number of other possible choices for the coefficients $A_{ij}$ can be envisaged. However, there are four important limitations on the possible choices:

1. It must be possible to solve equation (1). The basic requirement is that the determinant of A should be non-zero. In order to obtain accurate numerical solutions, it is also desirable that A should not be ill-conditioned.

2. It must be possible to realise the coefficients $A_{ij}$ physically in some way. The encoding process may be implemented explicitly in hardware (e.g. the Michelson interferometer), or it may be implicit in the physics of the system (e.g. nuclear precession). The hardware implementation is typically easier if the array is cyclic (i.e. each row is obtained by shifting the previous row one element to the left or right).

3. It is desirable that the experimental errors or signal-to-noise ratios of the decoded $X_j$ values should be at least as good as, or better than, the errors obtained when measuring the $X_j$ values directly by some other technique. Further, the improvement in signal-to-noise ratio should preferably be the same for all the $X_j$. This imposes a severe restriction on A.

4. It is desirable (though not essential) that the matrix A can be constructed and implemented for any order N. Changing N should not require radical redesign of the instrument.

We now consider points 2 and 3 above in more detail. Consider first a simple series of N measurements $X_j$ of some quantity, such as the individual weights of a group of objects. Suppose that the errors in these measurements have standard deviation $\sigma$, and that the weights of arbitrary collections of these objects can also be measured, also with error $\sigma$. It is possible to determine the weights of the individual objects more accurately than $\sigma$ by weighing collections of the objects in groups, rather than individually. The choice of objects in each group is made according to a suitable weighing scheme. Given N objects, N groups of these objects must be weighed according to a weighing scheme which may be represented by an N x N matrix of zeroes and ones. The presence of a one in the (i,j)th element indicates the inclusion of object j in the ith group, while a zero indicates its absence. In equation (1), the matrix A is the weighing scheme and the quantities $Y_i$ are the weights of the groups. For example, a suitable weighing scheme for 3 objects might look as follows:-

$$A \;=\; \begin{bmatrix} 1 & 1 & 0 \\ 1 & 0 & 1 \\ 0 & 1 & 1 \end{bmatrix} \tag{2}$$

A matrix of zeroes and ones is appropriate to a type of measurement in which the individual measurements can be co-added into the group measurements, or omitted. In the weighing example, this is the situation when a spring balance is used: each object can be put on the pan, or not, as required.

If a beam balance is used, we have three options for each object: use the left-hand pan, the right-hand pan, or neither. The weighing scheme for this experiment requires a matrix of zeroes, ones and minus ones. This clearly illustrates that the nature of the experiment determines the possible values of the coefficients $A_{ij}$ which can be realised.

Considerable theoretical work has been carried out to find suitable matrices of the above types, which satisfy the above limitations. The conditions are very restrictive, and suitable matrices known only for certain values of N. Confining our attention to matrices of zeroes and ones, the best solutions are the so-called Hadamard simplex matrices, or S-matrices. The process of solving equation (1) is then an inverse Hadamard transform. Exactly one S-matrix (plus its cyclic permutations) exists for each N of the form N = 4n-1, n = 1,2,3,... (Note that requirement 4 above is not satisfied. How we proceed when N is not of this form will be dealt with below). Constructions for S-matrices of various orders satisfy requirement 3; the signal-to-noise ratio of each unknown $X_j$ (computed by inverse Hadamard transform) is improved by an enhancement factor

$$E \;=\; \frac{(N + 1)}{2\sqrt{N}} \approx \frac{\sqrt{N}}{2} \text{ for large N} \tag{3}$$

relative to the signal-to-noise ratio of $X_j$ measured directly.

These principles have been used in the construction of Hadamard transform spectrometers (HTS). For example, Decker and Harwit (J.A. Decker, Jr., and M. Harwit, Appl. Opt., 8. (1969), p.2552) constructed a multiplexing dispersive instrument using a multislit encoding mask at the exit focal plane of a conventional dispersive monochromator. This mask allowed more than one spectral resolution element (i.e. radiation at different wavelengths) to impinge upon the detector at once; hence, the encoding mask multiplexed the dispersed radiation. The pattern of slits in the mask modelled the pattern of zeroes and ones in one row of an S-matrix. The mask was physically moved to allow a different combination of spectral resolution elements to impinge on the detector before each detector reading was performed.

Previous applications of Hadamard transforms to spectroscopy have concentrated on obtaining multiplex and throughput advantages from spectrometers designed to look at one sample at a time. We have now developed a Hadamard encoding scheme for multi-sample spectrometers which can examine several samples at once, a capability which finds particular application in such applications as on-line process control and monitoring.

According to the present invention there is provided a spectrometer for the simultaneous examination of a plurality of samples comprising: a source of radiation; sample receiving means for simultaneously positioning each of said plurality of samples in the path of radiation from said source; primary encoding means for individually encoding at least part of a spectrum of the radiation from said source directed at each of said plurality of samples; secondary encoding means for selectively modulating the intensity of radiation directed at each one of said plurality of samples by a predetermined amount; and detector means for simultaneously detecting the selectively modulated radiation from each of said plurality of samples.

Referring to equation (1). The quantities $Y_i$, $X_j$ are now no longer to be regarded as simple numbers, but instead become vectors, $\overline{Y}_i$, $\overline{X}_j$ in a space with an arbitrary number of dimensions P. The P components of each of these vectors are to be regarded as radiation intensities (or voltages, or any other kind of signal amplitude) measured at a series of P frequencies or times. Thus each vector represents a complete spectrum (or interferogram, free induction decay, or any other kind of signal trace). For purposes of illustration, the vectors will be regarded as FT-IR interferograms in what follows.

Composite interferograms $\overline{Y}_i$ are measured experimentally as additive combinations of some or all of the interferograms $\overline{X}_j$ contributed by individual samples. Thus the coefficients $A_{ij}$ are either zero or one in this simplest version of the technique. The co-adding of the $\overline{X}_j$ is a process of vector addition, e.g.

$$\overline{Y}_i \quad = \sum_{j=1}^{N} A_{ij} \; \overline{X}_j \qquad\qquad (4)$$

in which the corresponding data in each component of the interferograms $\overline{X}_j$ are added to give one component of $\overline{Y}_i$. Each row of equation (1) represents a complete experiment in which signals from several samples are co-added to give a composite interferogram. Multiple scans may be performed in each experiment in order to improve signal-to-noise ratio by co-adding the scans (signal averaging).

The elevation of equation (1) to a vector equation makes no difference to the previous arguments in favour of S-matrices as the best choice for the sampling matrix A. Provided the noise in the instrument arises only from the signal detection system, and is independent of the numbers of sources and samples contributing to the composite signal, the use of S-matrices as the signal encoding scheme will lead to an improvement in signal-to-noise ratio (equation (3), with N the number of samples).

In the above example where the signals are regarded as FT-IR interferograms, the experimental data (the N interferograms $\overline{Y}_i$) are doubly encoded signals. To recover the spectra of the individual samples, we need to perform (i) an inverse Hadamard transform to recover the individual interferograms, followed by (ii) apodisation and inverse Fourier transforms to obtain the spectra.

This technique exhibits advantages arising from multiplexing and signal averaging, and, in addition, it has the important advantage that only one expensive spectrometer or other signal detection system is required to measure multiple signals. If the radiation sources are inexpensive, the performance can be improved by employing one source per sample, thus increasing the total signal arriving at the detector.

The invention will be particularly described with reference to the accompanying drawings, in which:

Figures 1-3    represent basic multiplexing design schemes for different kinds of spectroscopic and other signal analysis instrumentation.

Figures 4a-d    show four spectra composed of one or more Lorentzian lineshapes with Gaussian noise superimposed.

Figures 5a-g    show composite shapes obtained by combining the four individual spectra (the Lorentzian lines, not the noise) and then adding noise with the same standard deviation as in Figure 4; and

Figures 6a-d    show demultiplexed spectra calculated in accordance with one mebodiment of the invention.

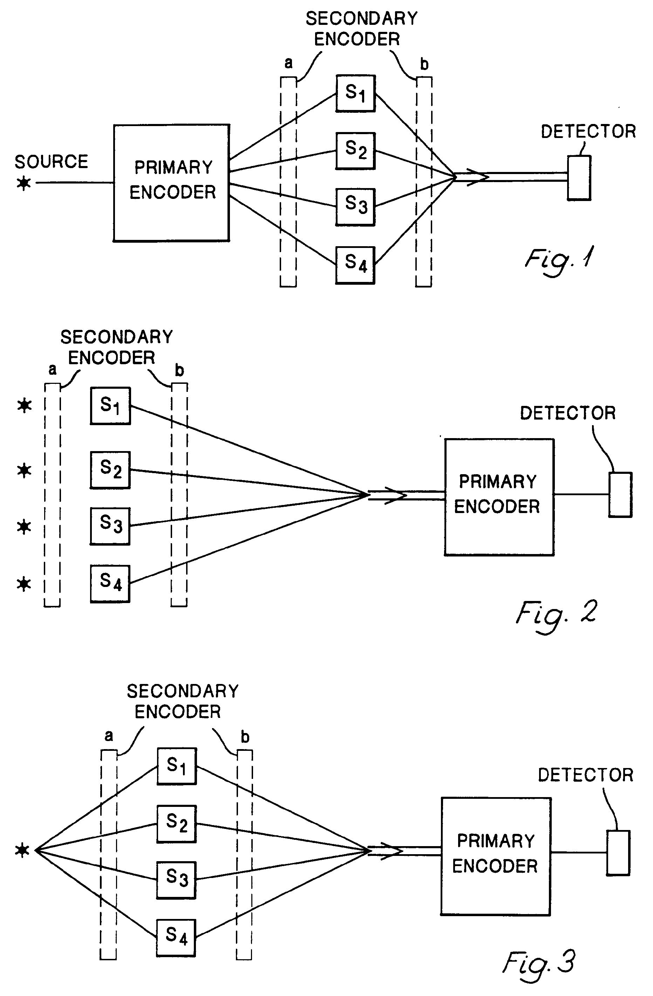

Some basic designs for multiplexing spectrometers are shown in Figures 1 to 3. All the schemes consist of one or more sources S, a primary encoder PE, a secondary encoder SE, an arbitrary number N of samples $S_i$ and a detector D which converts the signal to a digital record for analysis. In Figures 1 to 3 only one source is used. In optical systems this would be a lamp or laser but could equally be a microwave generator or other source.

Referring now to Figure 1 of the drawings, the energy from a source S is passed through a primary encoder PE. The primary encoder acts as a wavelength sorting device. It may be a diffraction grating, a simple filter system or a Fourier transform device such as a Michelson interferometer. Alternatively, for example in Fourier transform dielectric spectroscopy or NMR, it may be a pulse generator. The general function of the primary encoder is to ensure that each wavelength arriving at the detector is encoded in some way, to make it distinguishable from all the other wavelengths that may arrive.

In Figures 2 and 3 the primary encoder is placed after the sampling region R; the total signal is then wavelength encoded after the radiation passes through the samples. In optical spectroscopy this means that some signal, already attenuated by absorption by the samples, acts as a source for the spectrometer.

In Figure 2 multiple sources are used. This ensures that a larger signal energy will impinge on the detector. This configuration also has the advantage of improving the robustness of the system since the failure of a single source will not result in total signal loss but only loss of signal from one sample.

A feature of all three configurations is the multiple sampling channels which are co-added to present a single signal to the detector. In general for optical systems fibre optics or light guides will be needed for at least part of the system, since the samples may be physically separated. Such devices are used throughout the system and transduction to an electric signal made at the detector stage.

The secondary encoder SE is the device by which the signals are encoded by the coefficients $A_{ij}$ in equation 1. It modulates the intensities of the signals in the separate sample channels as required. If S-matrix coefficients are used ($A_{ij} = 0$ or 1), then the secondary encoder takes the form of a series of computer-controlled switches, which may be mechanical shutters or a bank of electro-optic switches such as an LC-OSA, for an optical system; or a series of electronic gates, if the signals are electrical in nature. Two alternative positions for the secondary encoder are shown in each illustration.

Figures 1-3 represent basic multiplexing design schemes for different kinds of spectroscopic and other signal analysis instrumentation. In each case, multiple signals from several samples are encoded using successive rows of an S-matrix to regulate the opening and closing of the switches in the secondary encoder. One problem remains: it was stated in the previous section that an S-matrix only exists when the matrix order N is of the form 4n-1, for n=1,2,3... How should we proceed when the number of samples does not satisfy this condition? The solution will be illustrated with reference to an experiment using four samples. The smallest suitable S-matrix has N=7. Equation (1) takes the form,

$$
\begin{bmatrix}
\overline{Y}_1 \\
\overline{Y}_2 \\
\overline{Y}_3 \\
\overline{Y}_4 \\
\hline
\overline{Y}_5 \\
\overline{Y}_6 \\
\overline{Y}_7
\end{bmatrix}
=
\left[
\begin{array}{cccc|ccc}
1 & 1 & 1 & 0 & 1 & 0 & 0 \\
1 & 1 & 0 & 1 & 0 & 0 & 1 \\
1 & 0 & 1 & 0 & 0 & 1 & 1 \\
0 & 1 & 0 & 0 & 1 & 1 & 1 \\
\hline
1 & 0 & 0 & 1 & 1 & 1 & 0 \\
0 & 0 & 1 & 1 & 1 & 0 & 1 \\
0 & 1 & 1 & 1 & 0 & 1 & 0
\end{array}
\right]
\begin{bmatrix}
\overline{X}_1 \\
\overline{X}_2 \\
\overline{X}_3 \\
\overline{X}_4 \\
\hline
\overline{X}_5 \\
\overline{X}_6 \\
\overline{X}_7
\end{bmatrix}
\qquad (5)
$$

Since samples 5, 6 and 7 do not exist, the vectors $\overline{X}_5$, $\overline{X}_6$ and $\overline{X}_7$ are null vectors, or arrays of zeroes in the computer sense. At the experimental sta-ge, we only need to employ the coefficients in the 7 x 4 submatrix on the left-hand side of A. That is, we perform seven separate experiments to measure seven composite signals $\overline{Y}_1....\overline{Y}_7$ using the seven rows of the submatrix as the schedule for controlling the four secondary encoder switches or shutters. Thus, the seven composite signals are composed from the four individual signals as follows:-

$$
\begin{aligned}
\overline{Y}_1 &= \overline{X}_1 + \overline{X}_2 + \overline{X}_3 \\
\overline{Y}_2 &= \overline{X}_1 + \overline{X}_2 \qquad\quad + \overline{X}_4 \\
\overline{Y}_3 &= \overline{X}_1 \qquad\quad + \overline{X}_3 \\
\overline{Y}_4 &= \qquad\quad \overline{X}_2 \\
\overline{Y}_5 &= \overline{X}_1 \qquad\qquad\qquad + \overline{X}_4 \\
\overline{Y}_6 &= \qquad\qquad \overline{X}_3 + \overline{X}_4 \\
\overline{Y}_7 &= \qquad + \overline{X}_2 + \overline{X}_3 + \overline{X}_4
\end{aligned}
\qquad (6)
$$

$$
\begin{bmatrix}
\overline{X}_1 \\
\overline{X}_2 \\
\overline{X}_3 \\
\overline{X}_4 \\
\hline
\overline{X}_5 \\
\overline{X}_6 \\
\overline{X}_7
\end{bmatrix}
=
\left[
\begin{array}{ccccccc}
\tfrac{1}{4} & \tfrac{1}{4} & \tfrac{1}{4} & -\tfrac{1}{4} & \tfrac{1}{4} & -\tfrac{1}{4} & -\tfrac{1}{4} \\
\tfrac{1}{4} & \tfrac{1}{4} & -\tfrac{1}{4} & \tfrac{1}{4} & -\tfrac{1}{4} & -\tfrac{1}{4} & \tfrac{1}{4} \\
\tfrac{1}{4} & -\tfrac{1}{4} & \tfrac{1}{4} & -\tfrac{1}{4} & -\tfrac{1}{4} & \tfrac{1}{4} & \tfrac{1}{4} \\
-\tfrac{1}{4} & \tfrac{1}{4} & -\tfrac{1}{4} & -\tfrac{1}{4} & \tfrac{1}{4} & \tfrac{1}{4} & \tfrac{1}{4} \\
\hline
\tfrac{1}{4} & -\tfrac{1}{4} & -\tfrac{1}{4} & \tfrac{1}{4} & \tfrac{1}{4} & \tfrac{1}{4} & -\tfrac{1}{4} \\
-\tfrac{1}{4} & -\tfrac{1}{4} & \tfrac{1}{4} & \tfrac{1}{4} & \tfrac{1}{4} & -\tfrac{1}{4} & \tfrac{1}{4} \\
-\tfrac{1}{4} & \tfrac{1}{4} & \tfrac{1}{4} & \tfrac{1}{4} & -\tfrac{1}{4} & \tfrac{1}{4} & -\tfrac{1}{4}
\end{array}
\right]
\begin{bmatrix}
\overline{Y}_1 \\
\overline{Y}_2 \\
\overline{Y}_3 \\
\overline{Y}_4 \\
\hline
\overline{Y}_5 \\
\overline{Y}_6 \\
\overline{Y}_7
\end{bmatrix}
\qquad (7)
$$

Since we are only interested in $\overline{X}_1....\overline{X}_4$ we only need to employ the coefficients in the 4 x 7 submatrix at the top of the inverse matrix $A^{-1}$ in the calculation.

An important question is whether the performance of seven separate experiments on just four samples in this way is more efficient than doing four separate experiments on the individual samples. The answer; surprisingly, is yes, as will now be demonstrated.

Suppose first that we perform one scan to acquire each of the seven composite signals. The signal-to-noise enhancement (the multiplex advantage) is given by equation (3) with N=7, i.e. 1.512. Alternatively, we might perform four experiments on the individual samples with two scans per sample. The signal-to-noise enhancement obtained from signal averaging of two scans is √2, or 1.414. Comparing an enhancement of 1.512 in seven scans with one of 1.414 in eight scans, we see a small but definite advantage in favour of the multiplexing scheme.

Table 1 lists the expected signal-to-noise enhancements with sequential multiplexing sampling schemes, for an instrument with up to 15 sample channels. We see that for 3 or more samples, there is always an advantage in using a multiplexing scheme. In each case, the multiplex advantage is more than sufficient to offset any redundancy implied by the performance of more experiments than there are samples.

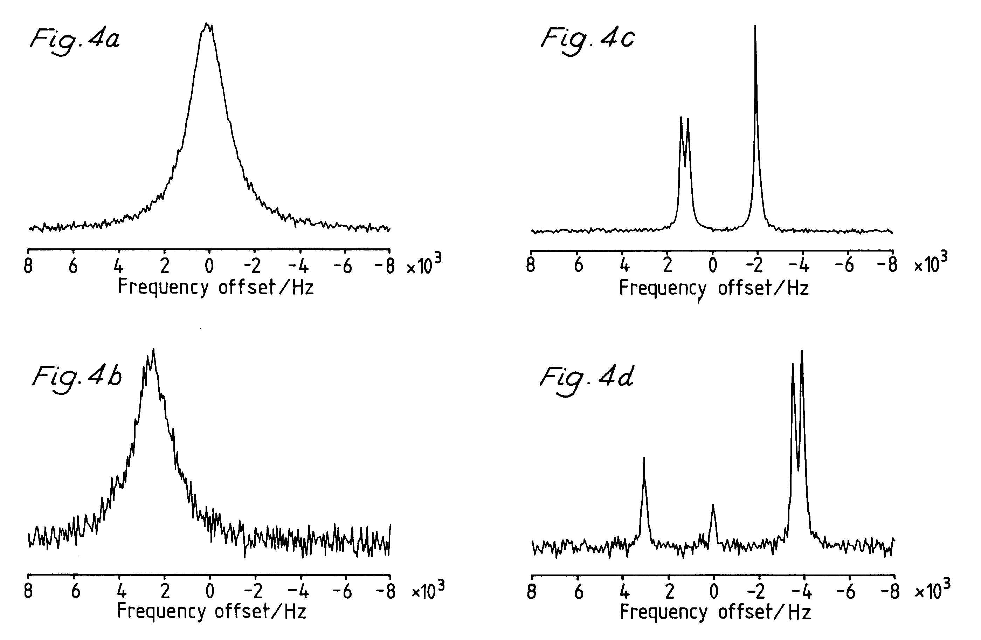

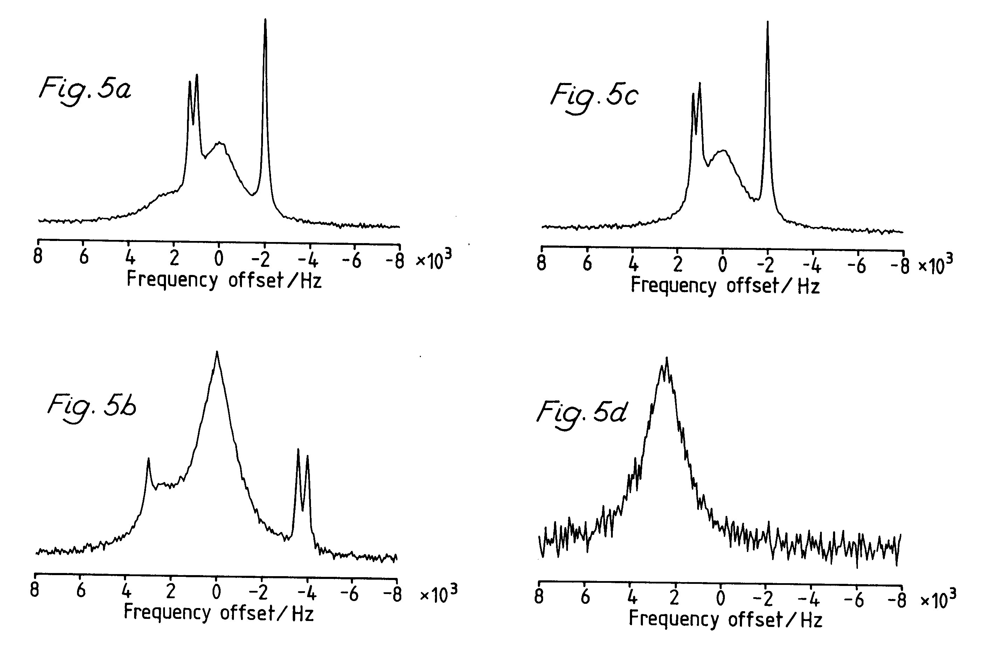

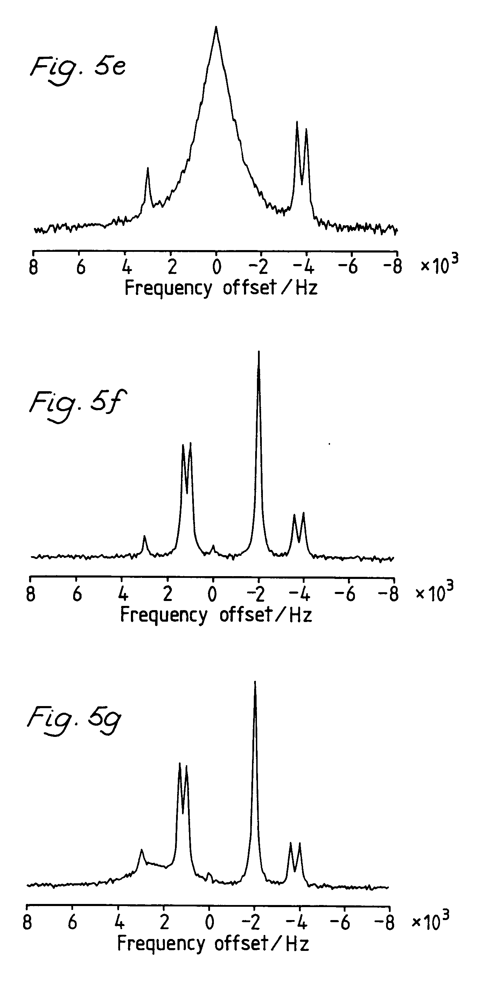

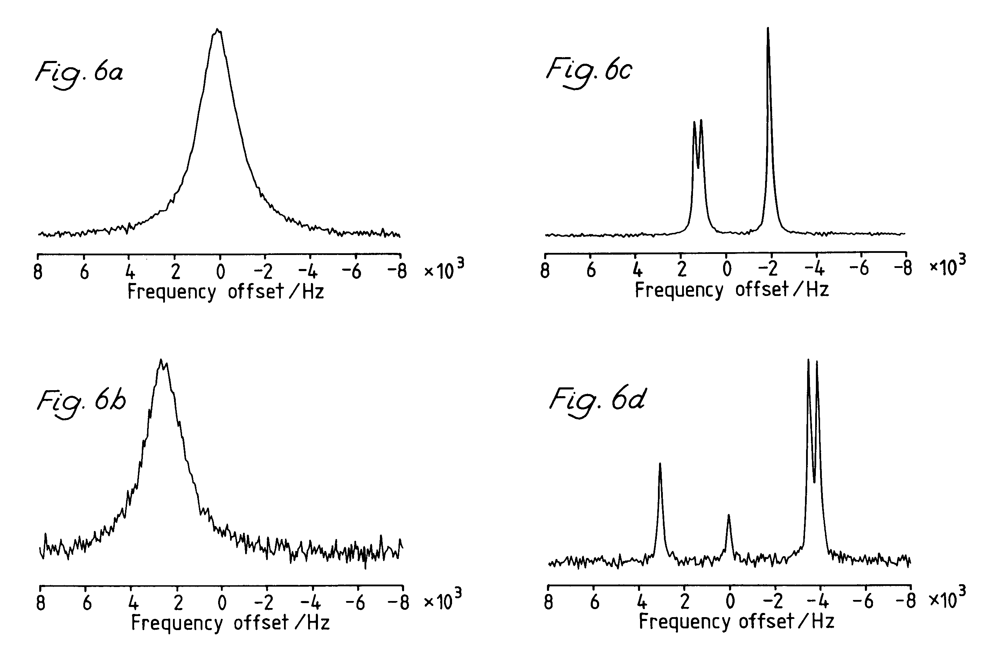

A numerical simulation suffices to demonstrate that the above ideas work in practice. Figures 4a-d show four spectra composed of one or more Lorentzian lineshapes with Gaussian noise superimposed. The exact nature of these spectra is irrelevant to the discussion, but it should be noted that the standard deviation of the noise in each data set was the same. The spectra are plotted with a normalised vertical scale so that the most intense peaks in each spectrum have the same height. Figures 5a-g show the seven composite shapes obtained by combining the four individual spectra (the Lorentzian lines, not the noise) according to equation (6), and then adding noise with the same standard deviation as in Figure 4. Finally, Figures 6a-d show the demultiplexed spectra calculated according to equation (7). Comparing these with Figures 4a-d, an improvement (albeit small) in signal-to-noise ratio is evident in each case. The essential condition for obtaining this improvement is that the noise in the composite spectra is independent of the number of contributions.

The inverse Hadamard transform represented by equation (7) is a trivial mathematical process, requiring negligible computer time, because the number of samples ($\leq$ the order of the matrix) will not generally be large.

## Table 1

| Number of channels | Order of S matrix | Signal/noise enhancement for sequential sampling | Signal/noise enhancement for S matrix sampling |
|---|---|---|---|
| 2 | 3 | 1.414 (4) | 1.06 (3) |
| 3 | 3 | 1.0 (3) | 1.06 (3) |
| 4 | 7 | 1.414 (8) | 1.512 (7) |
| 5 | 7 | 1.414 (10) | 1.512 (7) |
| 6 | 7 | 1.414 (12) | 1.512 (7) |
| 7 | 7 | 1.414 (14) | 1.512 (7) |
| 8 | 11 | 1.732 (24) | 1.809 (11) |
| 9 | 11 | 1.732 (27) | 1.809 (11) |
| 10 | 11 | 1.732 (30) | 1.809 (11) |
| 11 | 11 | 1.732 (33) | 1.809 (11) |
| 12 | 15 | 2.0 (48) | 2.066 (15) |
| 13 | 15 | 2.0 (52) | 2.066 (15) |
| 14 | 15 | 2.0 (56) | 2.066 (15) |
| 15 | 15 | 2.0 (60) | 2.066 (15) |

The figures in brackets represent the total number of scans required to achieve the signal to noise enhnacement shown in the column

## Claims

1. A spectrometer for the simultaneous examination of a plurality of samples comprising: a source of radiation; sample receiving means for simultaneously positioning each of said plurality of samples in the path of radiation from said source; primary encoding means for individually encoding at least part of a spectrum of the radiation from said source directed at each of said plurality of samples; secondary encoding means for selectively modulating the intensity of radiation directed at each one of said plurality of samples by a predetermined amount; and detector means for simultaneously detecting the selectively modulated radiation from each of said plurality of samples.

2. A spectrometer for the simultaneous examination of a plurality of samples as claimed in claim 1 **characterised in that** a source of radiation is provided for each of said plurality of samples.

3. A spectrometer for the simultaneous examination of a plurality of samples as claimed in claim 1 **characterised in that** said said primary encoding means is positioned between said sample receiving means and said detector means.

4. A spectrometer for the simultaneous examination of a plurality of samples as claimed in claim 1 **characterised in that** said said primary encoding means acts as a wavelength sorting device.

5. A spectrometer for the simultaneous examination of a plurality of samples as claimed in claim 4 **characterised in that** said said primary encoding means is a diffraction grating.

6. A spectrometer for the simultaneous examination of a plurality of samples as claimed in claim 4 **characterised in that** said said primary encoding means is a Michelson interferometer.

7. A spectrometer for the simultaneous examination of a plurality of samples as claimed in claim 4 **characterised in that** said said primary encoding means is a pulse generator.

8. A spectrometer for the simultaneous examination of a plurality of samples as claimed in any one of the preceding claims **characterised in that** said secondary encoder means comprises means to modulate the intensity of a plurality of signals $X_j$ wherein, for a plurality of observations $Y_j$ such that

$$
\begin{bmatrix} Y_1 \\ Y_2 \\ \cdot \\ \cdot \\ \cdot \\ \cdot \\ Y_N \end{bmatrix} = \begin{bmatrix} A_{11} & A_{12} \cdots\cdots\cdots A_{1N} \\ A_{21} & A_{22} \cdots\cdots\cdots A_{2N} \\ \cdot & \cdot \\ \cdot & \cdot \\ \cdot & \cdot \\ A_{N1} & \cdots\cdots\cdots A_{NN} \end{bmatrix} \begin{bmatrix} X_1 \\ X_2 \\ \cdot \\ \cdot \\ \cdot \\ X_N \end{bmatrix}
$$

wherein said coefficients $A_{ij}$ have the value 0 or 1.

9. A spectrometer for the simultaneous examination of a plurality of samples as claimed in claim 8 **characterised in that** said secondary encoder comprises a Michelson interferometer.

10. A spectrometer for the simultaneous examination of a plurality of samples as claimed in claim 8 **characterised in that** it includes means for detecting precession and dephasing of nuclear spins within a sample.

11. A spectrometer for the simultaneous examination of a plurality of samples as claimed in claim 8 **characterised in that** said secondary encoder includes a plurality of switches.

12. A spectrometer for the simultaneous examination of a plurality of samples as claimed in claim 11 **characterised in that** said switches comprise a bank of mechanical shutters.

13. A spectrometer for the simultaneous examination of a plurality of samples as claimed in claim 11 **characterised in that** said switches comprise a bank of electro-optic switches.

14. A spectrometer for the simultaneous examination of a plurality of samples as claimed in claim 11 **characterised in that** said switches comprise a plurality of electronic gates.


**Patentansprüche**

1. Spektrometer für die simultane Vermessung einer Mehrzahl von Proben mit: einer Strahlungsquelle; einer Proben-Aufnahmeeinrichtung zum gleichzeitigen Positionieren jeder Probe einer Mehrzahl von Proben im Weg der Strahlung der genannten Quelle; einer Primär-Codier-Einrichtung zum individuellen Codieren zumindest eines Teils eines Spektrums der Strahlung von der genannten Quelle, die auf jede der Proben gerichtet ist; einer Sekundär-Codiereinrichtung zum selektiven Modulieren der Intensität der auf jede der Proben gerichteten Strahlung entsprechend einer vorgegebenen Menge; und mit einem Detektor zum gleichzeitigen Messen der selektiv modulierten Strahlung von jeder der Proben aus der Mehrzahl von Proben.

2. Spektrometer zum simultanen Messen einer Mehrzahl von Proben gemäß Anspruch 1,
   dadurch **gekennzeichnet,**
   daß eine Strahlungsquelle für jede Probe aus der Mehrzahl von Proben vorgesehen ist.

3. Spektrometer für die simultane Messung einer Mehrzahl von Proben gemäß Anspruch 1,
   dadurch **gekennzeichnet,**
   daß die genannte Primär-Codiereinrichtung zwischen der genannten Proben-Einrichtung und dem genannten Detektor angeordnet ist.

4. Spektrometer für die simultane Messung einer Mehrzahl von Proben gemäß Anspruch 1,
   dadurch **gekennzeichnet,**
   daß die genannte Primär-Codiereinrichtung eine Trennung nach Wellenlängen durchführt.

5. Spektrometer für die simultane Messung einer Mehrzahl von Proben gemäß Anspruch 4,
   dadurch **gekennzeichnet,**
   daß die Primär-Codiereinrichtung ein Beugungsgitter ist.

6. Spektrometer für die simultane Messung einer Mehrzahl von Proben gemäß Anspruch 4,
   dadurch **gekennzeichnet,**
   daß die Primär-Codiereinrichtung ein Michelson-Interferometer ist.

7. Spektrometer für die simultane Messung einer Mehrzahl von Proben gemäß Anspruch 4,
   dadurch **gekennzeichnet,**
   daß die Primär-Codiereinrichtung ein Puls-Generator ist.

8. Spektrometer für die simultane Messung einer Mehrzahl von Proben gemäß einem der vorhergehenden Ansprüche,
   dadurch **gekennzeichnet,**
   daß die Sekundär-Codiereinrichtung eine Einrichtung aufweist zum Modulieren der Intensität einer Mehrzahl von Signalen $X_j$ derart, daß für eine Mehrzahl von Beobachtungswerten $X_j$ gilt:

$$
\begin{bmatrix} Y_1 \\ Y_2 \\ \cdot \\ \cdot \\ \cdot \\ Y_N \end{bmatrix} = \begin{bmatrix} A_{11} & A_{12} \cdots\cdots\cdots A_{1N} \\ A_{21} & A_{22} \cdots\cdots\cdots A_{2N} \\ \cdot & \cdot \\ \cdot & \cdot \\ \cdot & \cdot \\ A_{N1} & \cdots\cdots\cdots A_{NN} \end{bmatrix} \begin{bmatrix} X_1 \\ X_2 \\ \cdot \\ \cdot \\ \cdot \\ X_N \end{bmatrix}
$$

wobei die genannten Koeffizienten $A_{ij}$ die Werte 0 oder 1 annehmen.

8

**9.** Spektrometer für die simultane Messung einer Mehrzahl von Proben gemäß Anspruch 8,
dadurch **gekennzeichnet,**
daß der Sekundär-Codierer ein Michelson-Interferometer aufweist.

**10.** Spektrometer für die simultane Messung einer Mehrzahl von Proben gemäß Anspruch 8,
dadurch **gekennzeichnet,**
daß eine Einrichtung vorgesehen ist zum Messen von Präzession und Phasenverschiebung von Kernspins in der Probe.

**11.** Spektrometer für die simultane Messung einer Mehrzahl von Proben gemäß Anspruch 8,
dadurch **gekennzeichnet,**
daß der Sekundär-Codierer eine Mehrzahl von Schaltern aufweist.

**12.** Spektrometer für die simultane Messung einer Mehrzahl von Proben gemäß Anspruch 11,
dadurch **gekennzeichnet,**
daß die genannten Schalter eine Reihe mechanischer Verschlüsse aufweisen.

**13.** Spektrometer für die simultane Messung einer Mehrzahl von Proben gemäß Anspruch 11,
dadurch **gekennzeichnet,**
daß die genannten Schalter eine Reihe von elektro-optischen Schaltern aufweisen.

**14.** Spektrometer für die simultane Messung einer Mehrzahl von Proben gemäß Anspruch 11,
dadurch **gekennzeichnet,**
daß die genannten Schalter eine Mehrzahl elektronischer Gatter aufweisen.

## Revendications

**1.** Spectromètre pour l'examen simultané d'une pluralité d'échantillons comportant : une source de rayonnement; des moyens de réception d'échantillons pour positionner simultanément chacun de ladite pluralité d'échantillons dans le trajet de rayonnement provenant de ladite source; un moyen de codage principal pour coder individuellement au moins une partie d'un spectre du rayonnement provenant de ladite source dirigé sur chacun de ladite pluralité d'échantillons ; un moyen de codage secondaire pour moduler sélectivement l'intensité du rayonnement dirigé vers chacun de ladite pluralité d'échantillons d'une quantité prédéterminée ; et un moyen de détection pour détecter simultanément le rayonnement sélectivement modulé provenant de chacun de ladite pluralité d'échantillons.

**2.** Spectromètre pour l'examen simultané d'une pluralité d'échantillons selon la revendication 1, caractérisé en ce qu'une source de rayonnement est prévue pour chacun de ladite pluralité d'échantillons.

**3.** Spectromètre pour l'examen simultané d'une pluralité d'échantillons selon la revendication 1, caractérisé en ce que ledit moyen de codage principal est disposé entre lesdits moyens de réception d'échantillons et ledit moyen de détection.

**4.** Spectromètre pour l'examen simultané d'une pluralité d'échantillons selon la revendication 1, caractérisé en ce que ledit moyen de codage principal agit en tant que dispositif de tri de longueurs d'onde.

**5.** Spectromètre pour l'examen simultané d'une pluralité d'échantillons selon la revendication 4, caractérisé en ce que ledit moyen de codage principal est un réseau de diffraction.

**6.** Spectromètre pour l'examen simultané d'une pluralité d'échantillons selon la revendication 4, caractérisé en ce que ledit moyen de codage principal est un interféromètre de Michelson.

**7.** Spectromètre pour l'examen simultané d'une pluralité d'échantillons selon la revendication 4, caractérisé en ce que ledit moyen de codage principal est un générateur d'impulsions.

**8.** Spectromètre pour l'examen simultané d'une pluralité d'échantillons selon l'une quelconque des revendications précédentes, caractérisé en ce que ledit moyen de codage secondaire comporte des moyens pour moduler l'intensité d'une pluralité de signaux $X_j$, pour une pluralité d'observations $Y_j$ de telle sorte que

$$
\begin{bmatrix} Y_1 \\ Y_2 \\ \cdot \\ \cdot \\ \cdot \\ \cdot \\ Y_N \end{bmatrix} = \begin{bmatrix} A_{11} & A_{12}\ldots\ldots\ldots A_{1N} \\ A_{21} & A_{22}\ldots\ldots\ldots A_{2N} \\ \cdot & \cdot \\ \cdot & \cdot \\ \cdot & \cdot \\ \cdot & \cdot \\ A_{N1}\ldots\ldots\ldots\ldots A_{NN} \end{bmatrix} \begin{bmatrix} X_1 \\ X_2 \\ \cdot \\ \cdot \\ \cdot \\ \cdot \\ X_N \end{bmatrix}
$$

où lesdits coefficients $A_{ij}$ possèdent la valeur 0 ou 1.

9. Spectromètre pour l'examen simultané d'une pluralité d'échantillons selon la revendication 8, caractérisé en ce que ledit codeur secondaire comporte un interféromètre de Michelson.

10. Spectromètre pour l'examen simultané d'une pluralité d'échantillons selon la revendication 8, caractérisé en ce qu'il comprend des moyens pour détecter une précession et un déphasage de spins nucléaires à l'intérieur d'un échantillon.

11. Spectromètre pour l'examen simultané d'une pluralité d'échantillons selon la revendication 8, caractérisé en ce que ledit codeur secondaire comprend une pluralité de commutateurs.

12. Spectromètre pour l'examen simultané d'une pluralité d'échantillons selon la revendication 11, caractérisé en ce que lesdits commutateurs comportent une série d'obturateurs mécaniques.

13. Spectromètre pour l'examen simultané d'une pluralité d'échantillons selon la revendication 11, caractérisé en ce que lesdits commutateurs comportent une série de commutateurs électro-optiques.

14. Spectromètre pour l'examen simultané d'une pluralité d'échantillons selon la revendication 11, caractérisé en ce que lesdits commutateurs comportent une pluralité de portes électroniques.

SECONDARY
ENCODER

a          b

SOURCE

*   PRIMARY
    ENCODER

$S_1$

$S_2$

$S_3$

$S_4$

DETECTOR

*Fig. 1*

SECONDARY
ENCODER

a          b

*

*   $S_1$

*   $S_2$

*   $S_3$

*   $S_4$

DETECTOR

PRIMARY
ENCODER

*Fig. 2*

SECONDARY
ENCODER

a          b

*   $S_1$

$S_2$

$S_3$

$S_4$

DETECTOR

PRIMARY
ENCODER

*Fig. 3*

11

Fig. 4c

Fig. 4d

Fig. 4a

Fig. 4b

Fig.5a

Frequency offset/Hz

Fig.5c

Frequency offset/Hz

Fig.5b

Frequency offset/Hz

Fig.5d

Frequency offset/Hz

EP 0 487 704 B1

Fig. 5e

Frequency offset / Hz

$\times 10^3$

Fig. 5f

Frequency offset / Hz

$\times 10^3$

Fig. 5g

Frequency offset / Hz

$\times 10^3$

Fig. 6a

Fig. 6b

Fig. 6c

Fig. 6d